# EUROPÄISCHE PATENTSCHRIFT

(11) **EP 1 054 765 B1**
(45) Veröffentlichungstag und Bekanntmachung des Hinweises auf die Patenterteilung: **31.03.2004**
(21) Anmeldenummer: 99906212.8
(22) Anmeldetag: 30.01.1999
(51) Int. Cl.: B32B 18/00, C04B 35/80, F16D 69/02

(54) **VERFAHREN ZUR HERSTELLUNG EINES FASERVERBUNDWERKSTOFFS**
METHOD FOR PRODUCING A FIBRE COMPOSITE
PROCEDE POUR PRODUIRE UN COMPOSITE FIBREUX

(30) Priorität: 13.02.1998 DE 19805868
(43) Veröffentlichungstag der Anmeldung: 29.11.2000
(73) Patentinhaber: DaimlerChrysler AG, 70567 Stuttgart (DE)
(72) Erfinder: HAUG, Tilmann, D-88690 Uhldingen (DE); REBSTOCK, Kolja, D-89073 Ulm (DE); SCHWARZ, Christian, D-89075 Ulm (DE)
(86) Internationale Anmeldenummer: PCT/EP1999/000611
(87) Internationale Veröffentlichungsnummer: WO 1999/041069

(56) Entgegenhaltungen:
- EP-A- 0 528 131
- EP-A- 0 643 023
- US-A- 5 424 109

## Beschreibung

Die Erfindung betrifft ein Verfahren zur Herstellung eines Faserverbundwerkstoffs nach dem Oberbegriff des Anspruchs 1 und einen Faserverbundwerkstoff nach dem Oberbegriff des Anspruchs 16.

Ein gattungsgemäßes Verfahren sowie ein gattungsgemäßer keramischer Verbundwerkstoff sind in der nicht vorveröffentlichten deutschen Patentanmeldung 197 11 829.1 beschrieben. Die daraus bekannten Verstärkungsfasern sind hochwarmfeste Fasern, die in Form von Kurzfaserbündeln vorliegen. Die Faserbündel sind mit einem zur Pyrolyse geeigneten Bindemittel imprägniert. Dazu werden die Faserbündel in das Bindemittel getaucht. Das Bindemittel wird anschließend verfestigt. Damit werden die Faserbündel zusammengehalten und mechanisch verstärkt. Die Faserbündel werden mit weiteren Bindemitteln und Füllmitteln vermischt, und die Mischung wird zu einem CFK-Körper oder "Grünkörper" warm verpreßt, der anschließend unter Vakuum oder Schutzgas zu einem Formkörper mit einer Kohlenstoff-Matrix (C/C-Körper) pyrolysiert wird. Dabei wird auch die Faserbeschichtung umgewandelt, so daß die Faserbündel anschließend mit einer Kohlenstoffschicht überzogen sind. Der Formkörper wird anschließend mit einer Siliziumschmelze infiltriert. Danach liegt ein C/SiC-Faserverbundwerkstoff vor, in dem die Faserbündel in eine Matrix auf SiC-Basis eingebettet sind. Die Kurzfaserbündel sind in der Matrix statistisch verteilt eingebettet, wobei die einzelnen Filamente weitgehend erhalten sind. Die Beschichtung aus Kohlenstoff hat mit dem Matrixwerkstoff reagiert. Dadurch werden die Faserbündel vor dem aggressiven Angriff der Siliziumschmelze geschützt. Diese Faserverbundkeramik zeigt sehr gute tribologische Eigenschaften und ist darüber hinaus relativ preisgünstig und einfach herstellbar. Er ist insbesondere zur Herstellung von Bremsscheiben und/oder Bremsbelägen geeignet.

Dieser Werkstoff ist jedoch besonders hohen mechanischen Beanspruchungen, wie sie beispielsweise durch große Fahrzeugmassen oder extreme Geschwindigkeiten auftreten, nicht gewachsen, da er dafür zu spröde und zu wenig schadenstolerant ist.

Es gibt bereits verschiedene Lösungsvorschläge, um dieses Problem zu umgehen. Das deutsche Gebrauchsmuster 296 10 498 beschreibt eine Fahrzeugbrems- bzw. Fahrzeugkupplungsscheibe aus C-C/SiC-Verbundwerkstoff, wobei die Scheibe eine SiC-Beschichtung aufweist. Damit ist der äußere Bereich der Scheibe aus keramischem Material und liefert sehr gute Reibwerte, während der Kern ein Kohlenstoff-Körper ist, der durch seine Quasi-Duktilität eine hohe Schadenstoleranz aufweist. Die Herstellung derartig beschichteter Körper ist jedoch aufwendig und entsprechend teuer. Deswegen finden sie auch nur für besondere Anwendungen, zum Beispiel im Rennsport, Verwendung.

Die europäische Patenanmeldung EP 0 564 245 beschreibt ebenfalls einen mehrschichtigen Werkstoff, der jedoch mit einer Schutzschicht versehen werden muß, um das Eindringen von Silizium in tiefere Bereiche zu verhindern. Auch dies ist ein sehr aufwendiges und teures Verfahren.

Aufgabe der Erfindung ist es daher, einen Faserverbundwerkstoff der oben genannten Art bereitzustellen, der eine noch höhere Festigkeit und bessere Quasiduktilität des Bauteils bietet. Aufgabe der Erfindung ist ferner, ein Verfahren zu seiner Herstellung bereitzustellen, mit dem der Werkstoff einfach und preisgünstig herstellbar und daher für die Serienproduktion geeignet sind.

Die Lösung besteht in einem Verfahren mit den Merkmalen des Anspruchs 1 bzw. in einem Faserverbundwerkstoff mit den Merkmalen des Anspruchs 16.

Das erfindungsgemäße Verfahren zeichnet sich dadurch aus, daß zur Herstellung des Grünkörpers die Presse nacheinander mit den verschiedenen Preßmassen gefüllt wird, wobei die innere Preßmasse aus Fasern schadenstoleranter Kern und die äußerste Preßmasse aus Fasern keramisierte Reibschicht besteht.

Der erfindungsgemäße Werkstoff ist also ein Gradientenwerkstoff, dessen Vorteil in dem sehr einfachen erfindungsgemäßen Herstellungsverfahren liegt.

Erfindungsgemäß ist vorgesehen, bei der Herstellung des Grünkörpers die Preßmassen im Preßwerkzeug beim Befüllen so zu schichten, daß beim späteren Bauteil die hoch verschleißfeste, zu einem großen Teil keramisierte Reibschicht kontinuierlich in einen schadenstoleranten Kern übergeht. Auf diese Weise wird die hohe Verschleißbeständigkeit mit sehr guten mechanischen Kennwerten kombiniert.

Sind also die mechanischen Belastungen für das Bauteil extrem hoch, können Festigkeits- und Dehnungswerte, wie sie zum Beispiel im Dreipunkt-Biegetest nachgewiesen werden können, weiter gesteigert werden. Bei besonders hohen mechanischen Beanspruchungen, wie sie beispielsweise durch hohe Fahrzeugmassen oder extreme Geschwindigkeiten hervorgerufen werden, ist es möglich, daß bekannte Verfahren zur preisgünstigen Herstellung von faserverstärkter Verbundkeramik dahingehend anzupassen, daß der Werkstoff bzw. das Bauteil hohe Festigkeit und sehr gute Verschleißfestigkeit nach außen mit deutlich gesteigert er Quasiduktilität nach innen bietet.

Der Vorteil des erfindungsgemäßen Verfahrens liegt darin, daß keine Notwendigkeit besteht, Schichten mit verschiedenen Eigenschaften durch aufwendige Fügeverfahren zu verbinden. Der Gradient entsteht hier alleine durch die Befüllung. Die einzelnen Schichten weisen durch das Verfahren keine definierten Trennschichten auf.

Die notwendigen Füllhöhen lassen sich je nach Anwendung im Einzelfall aus Versuchen über die Verpreßbarkeit der verschiedenen Preßmassen bei konstantem Druck ermitteln.

Vorteilhafte Weiterbildungen ergeben sich aus den Unteransprüchen.

Eine stark keramisierte Reibschicht auf der Bauteil-, z.B. der Bremsscheibenoberfläche erhält man dadurch, daß die in der Preßmasse verarbeiteten Fasern Beschichtungen tragen, die es der Siliziumschmelze ermöglichen, außer kohlenstoffhaltigen Füllstoffen und pyrolysierten Bindern auch Kohlenstoff-Fasern teilweise zu Siliziumcarbid zu konvertieren. Dies gelingt, in dem bekannte Beschichtungen entsprechend dünn aufgetragen werden bzw. reaktivere kohlenstoffhaltige Beschichtungen Verwendung finden.

Die mit einer entsprechenden dünnen Beschichtung versehenen Fasern sind dadurch bei der Verarbeitung zur Preßmasse relativ weich. Sie weisen nach dem Mischen und Pressen einen hohen Verschlingungsgrad auf. Das bedeutet, daß es wenig bis gar keine Zwischenräume gibt, in denen sich beispielsweise Silizium ansammeln kann und somit nach der Infiltration mit flüssigem Silizium als nicht abreagiertes Rest-Silizium zurückbleibt. Die Fasern sind ferner reaktiv an die Matrix gebunden. Daraus folgt ein hoher Anteil an keramischer Faser. Die entstehende Reibschicht weist daher eine hohe Festigkeit mit ausreichender Schadenstoleranz auf und ist gekennzeichnet durch eine hohe Verschleißfestigkeit. Eine mit diesem Verfahren hergestellte Bremsscheibe weist z. B. einen hohen Reibwert mit entsprechend abgestimmten Belägen auf.

Auf mindestens einen Teil der verwendeten Verstärkungsfasern wird eine Schicht aus Pyrokohlenstoff (PyC) aufgebracht. Erst dann wird nach dem bekannten Verfahren eine einfache Tauchbeschichtung vorgenommen.

Diese bevorzugten Verstärkungsfasern sind also je einzeln mit zwei zusätzlichen Schichten überzogen. Die untere, direkt auf der Faser aufgetragene Schicht ist aus Pyrokohlenstoff. Auf diese Schicht ist eine an sich bekannte Tauchbeschichtung aus einem pyrolysierbaren Bindemittel aufgebracht. Bei der Infiltrierung des porösen Formkörpers mit flüssigem Silizium wirkt die aus der Harzbeschichtung hervorgegangene Kohlenstoffschicht als 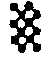 Opferschicht". Das flüssige Silizium reagiert mit dieser äußersten Schicht zu Siliziumcarbid. Dieses stellt eine Diffusionsbarriere für das flüssige Silizium dar, welches somit nicht weiter in die Faser eindringen kann. Die tiefer gelegene Schicht aus Pyrokohlenstoff und die Verstärkungsfasern im Kern werden nicht angegriffen.

Die so behandelten Fasern zeichnen sich durch besonders hohe Festigkeit aus. Die zusätzliche Schicht aus Pyrokohlenstoff bewirkt auch eine optimale Anbindung der Verstärkungsfasern an die Matrix. Sie wirken rißumleitend und sind längsbeweglich gleitend, was die guten Ergebnisse der Festigkeits- und Dreipunktbiegeversuche bewirkt. Faser-Pullout-Effekte sind möglich.

Durch die Verwendung dieser Verstärkungsfasern bei der Herstellung des erfindungsgemäßen Faserverbundwerkstoffs, auch in geringen Anteilen am Gesamtfaservolumen, lassen sich die Werte für Festigkeit und Dehnung, wie sie zum Beispiel im Dreipunkt-Biegetest nachgewiesen werden können, deutlich steigern. Die übrigen Parameter werden dadurch nicht beeinträchtigt.

Durch die Beschichtung der PyC-Fasern mit einer Harzlösung erhält man die Möglichkeit, diese Fasern auch für silizierte Werkstoffe zu verwenden.

Das Verfahren zur Herstellung dieser Verstärungsfasern zeichnet sich dadurch aus, daß Kohlenstoff-Fasern zunächst mit pyrolytischem Kohlenstoff beschichtet werden. Darunter werden hier sowohl pyrolysierte Tauchbeschichtungen wie z.B. Pech als auch aus der Gasphase abgeschiedene Schichten verstanden. Die Fasern werden anschließend mit pyrolisierbarem Kunststoffmaterial versehen.

Die Beschichtung mit pyrolytischem Kohlenstoff kann einmal durch Tauchbeschichtung, z. B. Eintauchen in ein Pechbad erfolgen. Dieses Verfahren eignet sich insbesondere für Langfasern. Zum anderen kann auf die Fasern eine CVD-Beschichtung, z. B. mit Methan in einem Reaktor, aufgetragen werden. Dieses Verfahren ist sowohl für Langfasern als auch für Kurzfasern gut geeignet.

Die Verwendung von Pech hat den Vorteil, daß als Pyrokohlenstoffschicht kristalliner Kohlenstoff entsteht, der wesentlich langsamer mit flüssigem Silizium reagiert als eine Schicht aus amorphem Kohlenstoff, wie sie bei der Verwendung z. B. eines Phenolharzes entsteht. Dadurch wird die Diffusionsbarriere für den amorphen Kohlenstoff noch verstärkt.

Langfasern werden vorzugsweise nach der Beschichtung und vor der Verarbeitung zu einem Grünkörper verschnitten.

Es können behandelte Einzelfasern oder Faserbündel verwendet werden. Diese Faserbündel bestehen vorzugsweise aus etwa 1.000 bis 14.000 Einzelfasern mit mittleren Durchmessern von etwa 5 bis 10 µm und einer Länge von etwa 1 bis 30 mm. Auf diese Weise können auch kommerziell erhältliche Faserbündel verwendet werden. Dies ermöglicht eine kostengünstige Herstellung.

Für den erfindungsgemäßen Gradientenwerkstoff bedeutet dies, daß in den nacheinander in die Preßform geschichteten Preßmassen Verstärkungsfasern enthalten sind, bei denen die Qualität der Faserbeschichtung von außen nach innen gesteigert wird. Im Kern einer späteren Bremsscheibe finden beispielsweise PyC-beschichtete Kohlenstoff-Fasern Verwendung, wodurch ein schaddenstolerantes Verhalten für das gesamt Bauteil gewährleistet ist. Die weitere Befüllung geschieht mit Preßmassen, die Fasern mit abnehmender Beschichtungsqualität enthalten, bis wiederum für die Reibschicht nur noch schwach beschichtete Fasern - im Extremfall unbeschichtete Fasern - zum Einsatz kommen. Die äußerste Schicht, die dann als eigentliche Reibschicht dient, kann also überwiegend oder sogar vollständig aus Siliziumcarbid bestehen, weil die schwach oder gar nicht beschichteten Fasern während der Flüssigsilizierung überwiegend oder vollständig zu Siliziumcarbid konvertiert werden.

Weiterhin ist es möglich, den Gradienten in mechanischen und tribologischen Eigenschaften nicht allein über die Faserbeschichtung zu erreichen, sondern sowohl Faserqualität als auch Faserlänge zu variieren.

Die Verwendung von Kurzfasern hat den weiteren Vorteil, daß durch den Befüllungs- und Preßvorgang auch Fasern senkrecht zur Preßebene orientiert werden und somit einen kontinuierlichen Übergang der Eigenschaften gewährleisten.

Zur Herstellung des erfindungsgemäßen Werkstoffs können alle gängigen Verstärkungsfasern verwendet werden. Bevorzugt werden Kohlenstoff-Fasern. Aber auch andere hochwarmfeste Fasern, wie Siliziumcarbid-Fasern oder Fasern auf der Basis von Si/C/B/N sind grundsätzlich geeignet. Ferner sind Glas- oder Metallfasern, z. Bsp. auf der Basis von Titan geeignet. Gut geeignet sind auch Aramidfasern.

Diese verschiedenen Variablen ermöglichen in Kombination eine definierte Änderung der Werkstoffeigenschaften über die Dicke der Scheibe.

Ausführungsbeispiele der vorliegenden Erfindung werden im folgenden anhand der beigefügten Zeichnungen näher beschrieben.

Es zeigen:
- Figur 1: eine schematische Darstellung eines Querschnitts über eine PyC-beschichtete Kohlenstoff-Faser;
- Figur 2: einen schematischen Querschnitt durch einen erfindungsgemäßen Gradientenwerkstoff;
- Figur 3: eine Abbildung einer nach dem erfindungsgemäßen Verfahren hergestellten Bremsscheibe im CFK-Zustand (Grünkörper);
- Figur 4,5: Schliffbilder des Gradientenaufbaus der Bremsscheibe aus Figur 3.

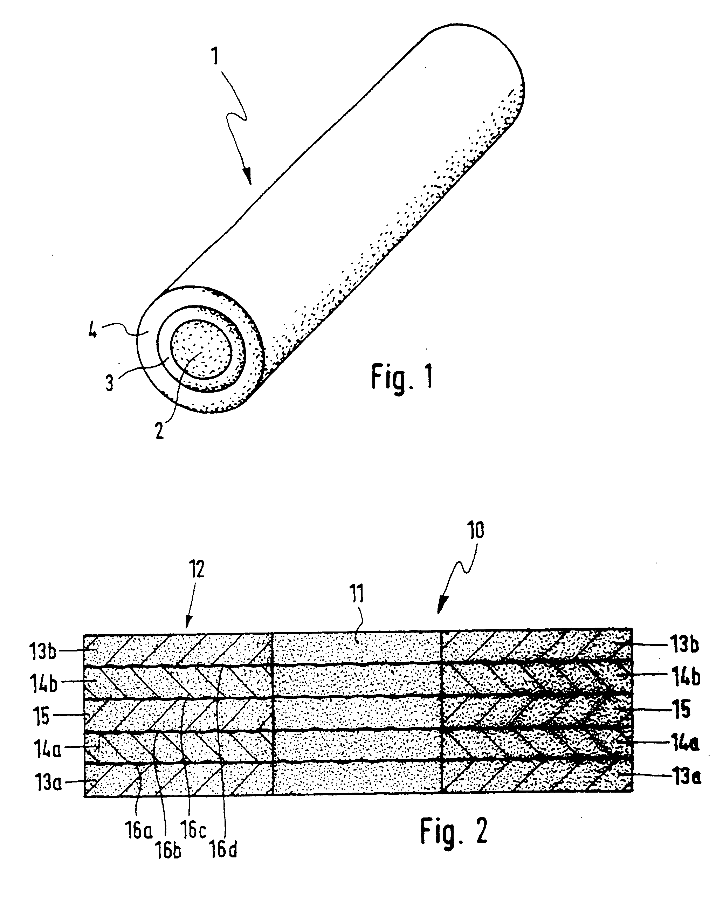

Die in Figur 1 dargestellte Verstärkungsfaser 1 weist einen inneren Kern 2 aus einer Kohlenstoffaser auf. Dieser Kern 2 ist mit einer Beschichtung 3 aus Pyrokohlenstoff versehen. Die Beschichtung 3 ist vorzugsweise etwa 100-300 nm dick. Auf der Beschichtung 3 ist eine äußere Schicht 4 aus einem pyrolysierbaren Bindemittel aufgebracht. Die Schicht 4 ist vorzugsweise etwa 200-800 nm dick. Dieses Bindemittel ist beispielsweise ein pyrolysierbares Harz oder Harzgemisch, vorzugsweise aus der Gruppe der Phenolharze. Die Schicht 4 wird bei der späteren Pyrolyse in Kohlenstoff umgewandelt, der wiederum bei der Infiltration mit flüssigem Silizium zu Siliziumcarbid reagiert. Der innere Bereich der Verstärkungsfaser 1, nämlich die Beschichtung 3 aus Pyrokohlenstoff und der von der Beschichtung 3 umhüllte Kern 2 der Verstärkungsfaser 1 werden vom flüssigen Silizium nicht angegriffen.

Diese Fasern sind auf verschiedene Weise herstellbar. Ein mögliches Verfahren eignet sich gut zur Beschichtung von Langfasern. Die Langfasern werden zunächst in ein Pechbad eingetaucht und anschließend in einer Trocknungsstation getrocknet. Die derart beschichteten Fasern werden schließlich in ein Bad aus einem pyrolysierbaren Phenolharz eingetaucht. Nachdem Durchlaufen einer weiteren Trocknungsstation sind die Langfasern einsatzbereit und können z. Bsp. auf die gewünschte Länge geschnitten werden.

Ein weiteres mögliches Verfahren ist sowohl zur Beschichtung von Kurzfasern als auch zur Beschichtung von Langfasern geeignet. Die Fasern werden zunächst einer CVD-Beschichtung, zum Beispiel mit Methan, und anschließend einer Tauchbeschichtung in einem Bad aus pyrolysierbarem Phenolharz unterzogen.

Das Herstellungsverfahren für den erfindungsgemäßen Werkstoff ist an sich bekannt und z. Bsp. in der deutschen Patentanmeldung 197 11 829.1 beschrieben.

Die Mischung zur Herstellung der Grünkörper besteht aus Fasern oder Faserbündeln, einem pyrolysierbaren Bindemittel, z. B. einem Phenolharz, und ggf. kohlenstoffhaltigen Füllmitteln wie Graphit oder Ruß sowie weiteren Füllmitteln wie Silizium, Carbiden, Nitriden oder Boriden, vorzugsweise Siliziumcarbid, Titancarbid oder Titanborid in Pulverform. Weitere bevorzugte Füllmittel zur Beeinflussung der Pyrolysekinetik, insbesondere zur Beschleunigung der Pyrolyse, sind z. Bsp. Polyvinylalkohol oder Methylcellulose. Ferner können der Mischung Zusätze von Eisen, Chrom, Titan, Molybdän, Nickel oder Aluminium zugegeben werden. Diese Zusätze verbessern das Verhalten des flüssigen Siliziums bei der Infiltration.

Die Bäder können auch bereits mit Füllstoffen wie z. Bsp. Graphit versetzt sein.

Die kohlenstoffhaltigen Füllmittel unterstützen den Zusammenhalt bei der Herstellung und anschließenden Pyrolyse des Grünkörpers und beschleunigen die Pyrolyse. Die weiteren Füllmittel dienen zur Einstellung der Verschleißfestigkeit der späteren Verbundkeramik.

Der Grünkörper kann durch Trocken- oder Warmfließpressen eines Granulates hergestellt werden. Das Granulat kann durch Aufbaugranulation der oben aufgezählten Komponenten erhalten werden. Das Granulat wird nach der Herstellung getrocknet und zu einem Grünkörper verpreßt. Dabei ist eine endformnahe Fertigung des Grünlings möglich. Da bei der Pyrolyse und Infiltration mit flüssigem Silizium wenig Schwindung auftritt, ist der Aufwand für die Nachbearbeitung gering.

Die oben beschriebene Mischung kann aber auch mit thermisch aushärtbaren Bindemitteln in einem Kneter gemischt, in einer Form gepreßt und unter Erwärmen zu einem Grünkörper ausgehärtet werden. Dabei kann der Grünkörper oder der aus der Pyrolyse des Grünkörpers resultierende poröse Formkörper auf eine gewünschte Form nachgearbeitet werden.

Die Porosität des Formkörpers läßt sich durch die Wahl der Zuschlagstoffe und ihre Menge einstellen.

### Ausführungsbeispiel 1

Aus 6 mm langen Kurzfasern SCF6 und 3 mm längen Kurzfasern SCF3 der Firma SGL, Phenolharz, Titancarbid und Graphitfüllstoff wurden drei verschiedene Preßmassen hergestellt.

Preßmasse 1 enthielt 3 mm-Fasern mit ausschließlich kommerzieller Epoxidharzschlichte. Preßmasse 2 enthielt 6 mm-Fasern, die durch Tränken in einer Pechlösung (Carbores, Fa. Rüttgers) und anschließendes Trocknen beschichtet wurden. Die beschichteten Fasern wurden dann durch Tauchen in eine stark verdünnte Phenolharzlösung und anschließendes Trocknen in einem Umluftschrank bei 130°C imprägniert. Preßmasse 3 enthielt eine Mischung aus 3 mm- und 6 mm- Fasern im Verhältnis 1 : 2, die wie soeben beschrieben zunächst in die oben genannte Pechlösung, dann in eine konzentrierte Phenolharzlösung getaucht wurden. Danach erfolgte ebenfalls jeweils ein Trocknungs- und Aushärteschritt.

Aus den verschieden beschichteten Fasern stellte man nach bekanntem Verfahren die drei Preßmassen her. Dazu wurden unbehandelte bzw. behandelte Fasern mit Phenolharz, Titancarbid und Graphit als Füllstoff in einem Mischkneter zu einer Preßmasse verknetet. Der Faservolumenanteil betrug 38%.

Mit diesen Preßmassen wurde eine Bremsscheibe hergestellt. Dazu wurde die endformnahe Matrize einer Warmpresse befüllt. Die Befüllung erfolgte in fünf Schritten ohne Vorverdichten. Zunächst befüllte man mit Preßmasse 1; die Höhe der Schicht betrug ca. 13 mm. Es folgte eine zweite Schicht aus Preßmasse 2 mit einer Füllhöhe von etwa 10 mm, eine dritte Schicht aus Preßmasse 3 mit einer Füllhöhe von etwa 20 mm, eine vierte Schicht aus Preßmasse 2 mit einer Füllhöhe von etwa 10 mm und eine fünfte und letzte Schicht aus Preßmasse 1 mit einer Füllhöhe von etwa 13 mm. Diese Schichtung wurde mit etwa 80 Bar verpresst. Das Ergebnis war eine Scheibe von ca. 25 mm Dicke.

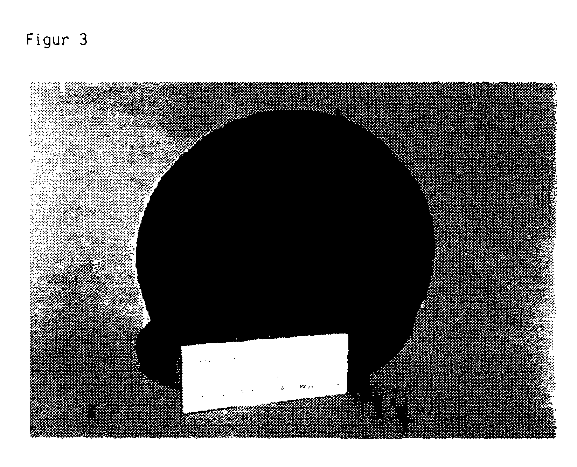

Diese Preßmasse wurde bei etwa 150°C zu einer formstabilen CFK-Scheibe ausgehärtet, wie sie in Figur 3 dargestellt ist. Die Pyrolyse fand bei 800°C in einem Pyrolyseofen unter Schutzgas statt. Die anschließende Infiltration mit flüssigem Silizium wurde unter Vakuum bei etwa 1600°C mit einer flüssigen Siliziumschmelze durchgeführt. Der resultierende C/SiC-Körper wurde auf Raumtemperatur heruntergekühlt.

Die resultierende Bremsscheibe wurde mit Bremsbelägen aus demselben Material, jedoch mit einem geringeren Siliziumanteil, getestet. Die Reibwerte lagen bei sehr guten 0,55 - 0,6.

Die Biegefestigkeitswerte wurden für die einzelnen Schichten separat ermittelt. Die Dreipunktbiegefestigkeit des Materials aus der Preßmasse 1 betrug etwa 170 MPa bei einer Dehnung von 0,12%. Die Dreipunktbiegefestigkeit des Materials aus der Preßmasse 2 betrug etwa 91 MPa bei einer Dehnung von 0,09%. Die Dreipunktbiegefestigkeit des Materials aus der Preßmasse 3 schließlich betrug ca. 67 MPa bei einer Dehnung von 0,21%.

### Ausführungsbeispiel 2

Es wurden gleiche Anteile von 3 mm langen Kurzfasern SCF3 und 6 mm langen Kurzfasern SCF6 der Firma SGL sowie T 800/6K Fasern der Firma Toray von 24 mm Länge verwendet. Die 3 mm- und 6 mm-Fasern wurden wie oben beschrieben zunächst mit einer Schicht aus Pyrokohlenstoff und dann mit einer Schicht aus Phenolharz versehen. Die 24 mm-Fasern besaßen eine über einen CVD-Prozeß mittels Methan aufgebrachte Pyrokohlenstoffschicht (PyC) und eine Harzbeschichtung, die durch Tauchen aufgebracht wurde.

Die so behandelten Fasern wurden wie oben beschrieben zu einer Preßmasse verarbeitet. Der Anteil der erfindungsgemäß beschichteten Fasern betrug wiederum 38%. Diese Fasern wurden mit Phenolharz, Titancarbid und Graphit als Füllstoff in einem Mischkneter zu einer Preßmasse verknetet.

Es wurden wie oben beschrieben drei verschiedene Preßmassen hergestellt, wobei die Preßmassen 1 und 2 wie oben beschrieben zusammengesetzt waren und die Preßmasse 3 eine Mischung aus 24 mm- und 6 mm-Fasern im Verhältnis 1 : 2 enthielt.

Die Befüllung der endformnahen Matrize der Warmpresse erfolgte in fünf Schritten ohne Vorverdichten wie oben beschrieben, wobei die Füllhöhe für die Schichten aus der Preßmasse 1 jeweils etwa 10 mm und für die Schichten aus der Preßmasse 2 jeweils etwa 12 mm betrug. Die Schichtung wurde mit 80 Bar verpreßt. Daraus ergab sich eine Scheibe von ca. 25 mm Dicke.

Die Preßmasse wurde bei etwa 150°C zu einer formstabilen CFK-Scheibe ausgehärtet. Die Pyrolyse fand bei 800°C in einem Pyrolyseofen unter Schutzgas statt. Die anschließende Silizierung wurde unter Vakuum bei etwa 1600°C mit einer flüssigen Siliziumschmelze durchgeführt. Der resultierende C/SiC-Körper wurde auf Raumtemperatur heruntergekühlt.

Die Reibwerte, die wie oben beschrieben gemessen wurden, betrugen ebenfalls 0,55 - 0,6. Die Dreipunktbiegefestigkeit des Materials aus der Preßmasse 2 (dicke Harzbeschichtung) betrug ca. 67 MPa bei einer Dehnung von 0,21%. Die Dreipunktbiegefestigkeit von Material aus Preßmasse 3 (PyC/Harzbeschichtung) betrug etwa 107 MPa bei einer Dehnung von 0,42%.

Figur 2 zeigt schematisch eine nach diesem Verfahren hergestellte Bremsscheibe 10 im Querschnitt. Die zentrale Öffnung der Bremsscheibe ist mit 11 und das eigentliche Scheibenmaterial mit 12 bezeichnet. Die Bremsscheibe 10 besteht aus dem erfindungsgemäßen Gradientenwerkstoff 12. Die äußersten Bereiche 13a, 13b an der Oberfläche der Bremsscheibe 10 bilden die Reibflächen. Sie bestehen aus verschleißresistenter widerstandsfähiger keramischer Substanz. Der zentrale Bereich 15 im Inneren der Bremsscheibe 10 bildet einen schadenstoleranten Kern. Er besteht aus einem kohlenstoffhaltigen Material mit wenig ausgeprägten keramischen Eigenschaften, dem insbesondere die für keramische Werkstoffe typische Sprödigkeit fehlt. Die Bereiche 14a und 14b bilden Zwischenbereiche, deren Material nicht so ausgeprägt keramisch wie das der äußeren Bereiche 13a, 13b ist, aber auch nicht so kohlenstoffhaltig wie das Material des zentralen Bereichs 15 ist.

Die Phasengrenzen 16a, b, c und d zwischen den einzelnen Bereichen 13a, b, 14a,b, 15 sind nicht scharf ausgeprägt, sondern eher fließend. Vorzugsweise gehen sie ineinander über. Das erfindungsgemäße Verfahren gewährleistet einen allmählichen Übergang und somit einen guten Zusammenhalt zwischen den Bereichen. Zusätzliche Fügeverfahren sind nicht notwendig.

Figur 3 zeigt eine nach dem Ausführungsbeispiel 1 hergestellte Bremsscheibe im CFK-Zustand, also nach dem Pressen, aber vor dem Pyrolisieren des Grünkörpers und vor der Infiltration mit flüssigem Silizium.

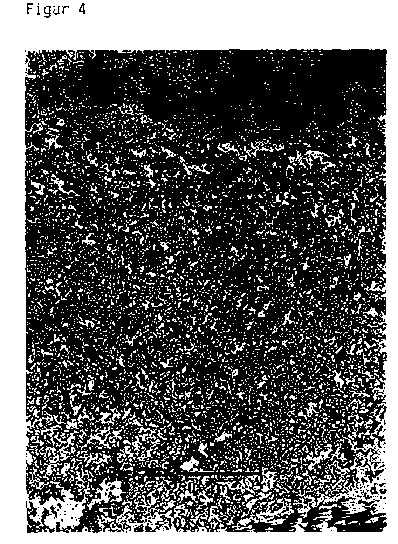

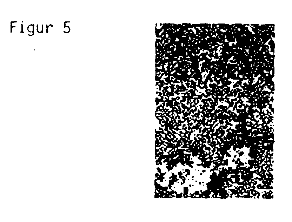

Die Figuren 4 und 5 zeigen Schliffbilder des Gradientenaufbaus des in den Figuren 2 und 3 gezeigten porösen Formkörpers. Die verschiedenen Schichten, die nahtlos ineinander übergehen, sind gut zu erkennen.

## Patentansprüche

1. Verfahren zum Herstellen eines Faserverbundwerkstoffs mit hochwarmfesten Fasern auf der Basis von Kohlenstoff, Silizium, Bor und/oder Stickstoff, die mit einer Matrix auf Siliziumbasis reaktionsgebunden sind, wobei aus Fasern, Bindemittel, und gegebenenfalls Füllstoffen und/oder Zuschlagstoffen eine Preßmasse hergestellt wird, die in einer Preßform zu einem Grünkörper verpreßt wird,
**dadurch gekennzeichnet,**
**daß** verschiedene Preßmassen hergestellt werden, die Fasern mit unterschiedlicher Qualität und/oder in unterschiedlichen Anteilen enthalten, und die Preßform in mehreren Schritten nacheinander mit den verschiedenen Preßmassen befüllt wird.

2. Verfahren nach Anspruch 1,
**dadurch gekennzeichnet,**
**daß** die Preßform ohne Vorverdichten befüllt wird.

3. Verfahren nach einem der vorhergehenden Ansprüche,
**dadurch gekennzeichnet,**
**daß** Fasern verwendet werden, die mit einer Schicht aus pyrolysierbarem Bindemittel überzogen worden sind.

4. Verfahren nach einem der vorhergehenden Ansprüche,
**dadurch gekennzeichnet,**
**daß** Fasern verwendet werden, die mit einer Schicht aus Pyrokohlenstoff und mit einer Schicht aus pyrolysierbarem Eindemittel überzogen worden sind.

5. Verfahren nach einem der vorhergehenden Ansprüche,
**dadurch gekennzeichnet,**
**daß** die verschiedenen Preßmassen unterschiedlich besczichtete Fasern verwendet werden.

6. Verfahren nach Anspruch 5,
**dadurch gekennzeichnet,**
**daß** die Preßform mit den unterschiedlich beschichteten Fasern derart befüllt wird, daß ein Grünkörper gebildet wird, aus dem ein Faserverbundwerkstoff mit einem im wesentlichen graphitischen Kern und einer im wesentlichen keramischen Oberfläche erhältlich ist.

7. Verfahren nach Anspruch 6,
**dadurch gekennzeichnet,**
**daß** für den im wesentlichen graphitischen Kern Fasern mit einar ausgeprägten Beschichtung und für die im wesentlichen keramische Oberfläche Fasern mit einer dünnen Beschichtung und/oder Fasern ohne Beschichtung verwendet werden.

8. Verfahren nach Anspruch 6,
**dadurch** gekennzeiehnet,
daß für den im wesentlichen graphitischen Kern Fasern mit einer gegenüber der Matrix wenig reaktiven Beschichtung und für die im wesentlichen keramische Oberfläche Fasern mit einer gegenüber der Matrix reaktiveren Beschichtung verwendet werden.

9. Verfahren nach einem der vorhergehenden Ansprüche,
**dadurch gekennzeichnet,**
**daß** zur Herstellung der Preßmassen im wesentlichen Kurzfasern oder Kurzfaserbündel verwendet werden.

10. Verfahren nach einem der vorhergehenden Ansprüche,
**dadurch gekennzeichnet,**
**daß** für die verschiedenen Preßmassen Fasern mit unterschiedlicher Länge verwendet werden.

11. Verfahren nach einem der vorhergehenden Ansprüche,
**dadurch gekennzeichnet,**
**daß** für die verschiedenen Preßmassen Fasern aus einem unterschiedlichen Material verwendet werden.

12. Verfahren nach einem der vorhergehenden Ansprüche,
**dadurch gekennzeichnet,**
**daß** zum Herstellen der Preßmassen die einzelnen Komponenten zu einem Granulat verarbeitet werden, insbesondere durch Aufbaugranulation und das Granulat getrocknet und zu dem Grünkörper verpreßt wird.

13. Verfahren nach Anspruch 12,
**dadurch gekennzeichnet,**
**daß** das Granulat durch Trocken- oder Warmfließpressen verpreßt wird.

14. Verfahren nach einem der Ansprüche 1 bis 11,
**dadurch gekennzeichnet,**
**daß** zum Herstellen der Preßmasse die einzelnen Komponenten in einem Kneter gemischt werden und die Mischung zu einem Grünkörper verpreßt wird.

15. Verfahren nach einem der vorhergehenden Ansprüche,
**dadurch gekennzeichnet,**
**daß** der Preßmasse ein thermisch aushärtbares Bindemittel zugegeben wird und der gepreßte Grünkörper unter Erwärmen ausgehärtet wird.

16. Faservarbundwerkstoff mit hochwarmfesten Fasern auf der Basis von Kohlenstoff, Silizium, Bor und/oder Stickstoff, die mit einer Matrix auf Siliziumbasis reaktionsgebunden sind,
**dadurch gekennzeichnet,**
**daß** er durch das Verfahren nach einem der Ansprüche 1 bis 15 herstellbar ist.

17. Faserverbundwerkstoff nach Anspruch 16,
**dadurch gekennzeichnet,**
**daß** er Fasern mit einer Schicht Kohlenstoff und/oder Pyrokohlenstoff enthält.

18. Faserverbundwerkstoff nach Anspruch 16 oder 17,
**dadurch gekennzeichnet,**
**daß** die verschiedenen Schichten unterschiedlich beschichtete Fasern aufweisen.

19. Faserverbundwerkstoff nach einem der Ansprüche 15 bis 18,
**dadurch gekennzeichnet,**
**daß** er einen im wesentlichen graphitischen Kern und eine im wesentlichen keramische Oberfläche aufweist.

20. Faserverbundwerkstoff nach Anspruch 19,
**dadurch gekennzeichnet,**
**daß** der im wesentlichen graphitischen Kern Fasern mit einer ausgeprägten Beschichtung und die im wesentlichen keramische Oberfläche Fasern mit einer dünnen Beschichtung und/oder Fasern ohne Beschichtung enthält.

21. Faserverbundwerkstoff nach Anspruch 19,
**dadurch gekennzeichnet,**
**daß** der im wesentlichen graphitischen Kern wenig oder keine mit der Matrix reaktionsgebundene Fasern und die im wesentlichen keramische Oberfläche überwiegend oder ausschließlich mit der Matrix reaktionsgebundene Fasern aufweisen.

22. Faserverbundwerkstoff nach einem der Ansprüche 16 bis 21,
**dadurch gekennzeichnet,**
**daß** er im wesentlichen Kurzfasern oder Kurzfaserbundel aufweist.

23. Faserverbundwerkstoff nach einem der Ansprüche 16 bis 22,
**dadurch gekennzeichnet,**
**daß** die verschiedenen Schichten Fasern mit unterschiedlicher Länge aufweisen.

24. Faserverbundwerkstoff nach einem der Ansprüche 16 bis 23,
**dadurch gekennzeichnet,**
**daß** die verschiedenen Schichten Fasern aus einem unterschiedlichen Material aufweisen.

## Claims

1. Method for the production of a fibrous composite material with high-temperature fibres based on carbon, silicon, boron and/or nitrogen, which are reaction-bonded to a matrix based on silicon, whereby a moulding compound is produced from fibres, binders and, if required, fillers and/or additives and pressed in a mould to form a green body,
**characterised in that**
various moulding compounds containing fibres of different quality and/or in different proportions are produced, and **in that** the mould is charged with these various moulding compounds in several consecutive steps.

2. Method according to claim 1
**characterised in that**
the mould is charged without prior compaction.

3. Method according to any of the preceding claims,
**characterised in that**
fibres coated with a layer of pyrolysable binder are used.

4. Method according to any of the preceding claims,
**characterised in that**
fibres coated with a layer of pyrocarbon and a layer of pyrolysable binder are used.

5. Method according to any of the preceding claims,
**characterised in that**
differently coated fibres are used to produce the various moulding compounds.

6. Method according to claim 5,
**characterised in that**
that the mould is so charged with the differently coated fibres that a green body is formed from which a fibrous composite material with an essentially graphitic core and an essentially ceramic surface can be obtained.

7. Method according to claim 6,
**characterised in that**
fibres with a distinctive coating are used for the essentially graphitic core and fibres with a thin coating and/or fibres without any coating are used for the essentially ceramic surface.

8. Method according to claim 6,
**characterised in that**
fibres with a coating which is less reactive relative to the matrix are used for the essentially graphitic core and fibres with a coating which is more reactive relative to the matrix are used for the essentially ceramic surface.

9. Method according to any of the preceding claims,
**characterised in that**
short fibres or bundles of short fibres are mainly used for the production of the moulding compounds.

10. Method according to any of the preceding claims,
**characterised in that**
fibres of different lengths are used for the various moulding compounds.

11. Method according to any of the preceding claims,
**characterised in that**
fibres of different materials are used for the various moulding compounds.

12. Method according to any of the preceding claims,
**characterised in that**
the individual components are processed to form a granulate, in particular by pelletising, to produce the moulding compounds, and **in that** the granulate is dried and pressed to form the green body.

13. Method according to claim 12,
**characterised in that**
the granulate is processed by dry or hot flow moulding.

14. Method according to any of claims 1 to 11,
**characterised in that**
the individual components are mixed in a kneader to produce the moulding compound, and **in that** the mix is pressed to form the green body.

15. Method according to any of the preceding claims,
**characterised in that**
a thermally curable binder is added to the moulding compound, and **in that** the pressed green body is cured under the influence of heat.

16. Fibrous composite material with high-temperature fibres based on carbon, silicon, boron and/or nitrogen, which are reaction-bonded to a matrix based on silicon,
**characterised in that**
it can be produced by the method according to claims 1 to 15.

17. Fibrous composite material according to claim 16,
**characterised in that**
it comprises fibres with a carbon and/or pyrocarbon layer.

18. Fibrous composite material according to claim 16 or 17,
**characterised in that**
the various layers consist of differently coated fibres.

19. Fibrous composite material according to any of claims 16 to 18,
**characterised in that**
it consists of an essentially graphitic core and an essentially ceramic surface.

20. Fibrous composite material according to claim 19,
**characterised in that**
the essentially graphitic core comprises fibres with a distinctive coating and the essentially ceramic surface comprises fibres with a thin coating and/or fibres without any coating.

21. Fibrous composite material according to claim 19,
**characterised in that**
the essentially graphitic core contains few, if any, fibres which are reaction-bonded to the matrix and the essentially ceramic surface contains largely or exclusively fibres which are reaction-bonded to the matrix.

22. Fibrous composite material according to any of claims 16 to 21,
**characterised in that**
it contains mainly short fibres or short fibre bundles.

23. Fibrous composite material according to any of claims 16 to 22,
**characterised in that**
the various layers contain fibres of different lengths.

24. Fibrous composite material according to any of claims 16 to 23,
**characterised in that**
the various layers contain fibres of different materials.

## Revendications

1. Procédé de fabrication d'un matériau composite fibreux comprenant des fibres résistant à des températures élevées, à base de carbone, de silicium, de bore et/ou d'azote, qui sont liées par réaction à une matrice à base de silicium, où une pâte à mouler est fabriquée à partir de fibres, d'un liant et, le cas échéant, de charges et/ou d'additifs, laquelle pâte à mouler est comprimée dans un moule pour former un corps vert,
**caractérisé**
**en ce que** différentes pâtes à mouler sont fabriquées, qui contiennent des fibres de qualité différente et/ou dans des proportions variables, et le moule est rempli, en plusieurs étapes successives, des différentes pâtes à mouler.

2. Procédé selon la revendication 1, **caractérisé en ce que** le moule est rempli sans précompactage.

3. Procédé selon l'une des revendications précédentes, **caractérisé en ce que** l'on utilise des fibres qui ont été recouvertes d'une couche d'un liant pouvant être pyrolysé.

4. Procédé selon l'une quelconque des revendications précédentes, **caractérisé en ce que** l'on utilise des fibres qui ont été recouvertes d'une couche de pyrocarbone et d'une couche d'un liant pouvant être pyrolysé.

5. Procédé selon l'une quelconque des revendications précédentes, **caractérisé en ce que** l'on utilise, pour les différentes pâtes à mouler, des fibres recouvertes de façons diverses.

6. Procédé selon la revendication 5, **caractérisé en ce que** le moule est rempli de fibres recouvertes de façons diverses, de manière telle qu'un corps vert soit formé, à partir duquel l'on obtient un matériau composite fibreux comportant un noyau essentiellement graphitique et une surface essentiellement céramique.

7. Procédé selon la revendication 6, **caractérisé en ce que** l'on utilise, pour le noyau essentiellement graphitique, des fibres ayant un revêtement à caractère marqué et, pour la surface essentiellement céramique, des fibres comportant un mince revêtement et/ou des fibres sans revêtement.

8. Procédé selon la revendication 6, **caractérisé en ce que** l'on utilise, pour le noyau essentiellement graphitique, des fibres ayant un revêtement peu réactif par rapport à la matrice et, pour la surface essentiellement céramique, des fibres ayant un revêtement plus réactif par rapport à la matrice.

9. Procédé selon l'une quelconque des revendications précédentes, **caractérisé en ce que** l'on utilise; pour la fabrication des pâtes à mouler, essentiellement des fibres courtes ou des faisceaux de fibres courtes.

10. Procédé selon l'une quelconque des revendications précédentes, **caractérisé en ce que** l'on utilise, pour les différentes pâtes à mouler, des fibres de longueur variable.

11. Procédé selon l'une quelconque des revendications précédentes, **caractérisé en ce que** l'on utilise, pour les différentes pâtes à mouler, des fibres d'un matériau différent.

12. Procédé selon l'une quelconque des revendications précédentes, **caractérisé en ce que** les différents composants sont transformés en granulat pour la fabrication des pâtes à mouler, en particulier par granulation de la structure, et le granulat est séché et comprimé pour former le corps vert.

13. Procédé selon la revendication 12, **caractérisé en ce que** le granulat est comprimé par pressage à sec ou par extrusion à chaud.

14. Procédé selon l'une quelconque des revendications 1 à 11, **caractérisé en ce que**, pour la fabrication de la pâte à mouler, les différents composants sont mélangés dans une pétrisseuse, et le mélange est comprimé pour former un corps vert.

15. Procédé selon l'une quelconque des revendications précédentes, **caractérisé en ce qu'**un liant durcissable thermiquement est ajouté à la pâte à mouler, et le corps vert comprimé est durci en chauffant.

16. Matériau composite fibreux comprenant des fibres résistant à des températures élevées, à base de carbone, de silicium, de bore et/ou d'azote, qui sont liées par réaction, à une matrice à base de silicium,
**caractérisé**
**en ce que** le matériau composite fibreux peut être fabriqué par le procédé selon l'une quelconque des revendications 1 à 15.

17. Matériau composite fibreux selon la revendication 16, **caractérisé en ce qu'**il contient des fibres comportant une couche de carbone et/ou de pyrocarbone.

18. Matériau composite fibreux selon la revendication 16 ou 17, **caractérisé en ce que** les différentes couches présentent des fibres recouvertes de façons diverses.

19. Matériau composite fibreux selon l'une quelconque des revendications 16 à 18, **caractérisé en ce qu'**il présente un noyau essentiellement graphitique et une surface essentiellement céramique.

20. Matériau composite fibreux selon la revendication 19, **caractérisé en ce que** le noyau essentiellement graphitique contient des fibres comportant un revêtement à caractère marqué, et la surface essentiellement céramique contient des fibres comportant un mince revêtement et/ou des fibres sans revêtement.

21. Matériau composite fibreux selon la revendication 19, **caractérisé en ce que** le noyau essentiellement graphitique présente peu de fibres ou aucune fibre liée par réaction à la matrice, et la surface essentiellement céramique présente essentiellement ou exclusivement des fibres liées par réaction à la matrice.

22. Matériau composite fibreux selon l'une quelconque des revendications 16 à 21, **caractérisé en ce qu'**il présente essentiellement des fibres courtes ou des faisceaux de fibres courtes.

23. Matériau composite fibreux selon l'une quelconque des revendications 16 à 22, **caractérisé en ce que** les différentes couches présentent des fibres ayant une longueur variable.

24. Matériau composite fibreux selon l'une quelconque des revendications 16 à 23, **caractérisé en ce que** les différentes couches présentent des fibres d'un matériau divers.
